# EUROPÄISCHE PATENTSCHRIFT

(11) **EP 2 714 400 B1**
(45) Veröffentlichungstag und Bekanntmachung des Hinweises auf die Patenterteilung: **15.07.2015**
(21) Anmeldenummer: 12726393.7
(22) Anmeldetag: 31.05.2012
(51) Int. Cl.: B42D 25/43

(54) **MEHRSCHICHTKÖRPER, VERFAHREN ZU DESSEN HERSTELLUNG UND HERSTELLUNG FÄLSCHUNGSSICHERER DOKUMENTE UNTER DESSEN VERWENDUNG**
MULTI-LAYER BODY, METHOD FOR PRODUCING IT, AND PRODUCTION OF FORGERY-PROOF DOCUMENTS USING SAID MULTI-LAYER BODY
CORPS MULTICOUCHE, SON PROCÉDÉ DE FABRICATION ET FABRICATION DE DOCUMENTS INFALSIFIABLES EN UTILISANT LE CORPS MULTICOUCHE

(30) Priorität: 31.05.2011 DE 102011050746
(43) Veröffentlichungstag der Anmeldung: 09.04.2014
(73) Patentinhaber: Hologram Industries Research GmbH, 85652 Pliening-Ottersberg (DE)
(72) Erfinder: MENZ, Irina, 85630 Grasbrunn (DE)
(74) Vertreter: Farago, Peter Andreas
(86) Internationale Anmeldenummer: PCT/EP2012/060233
(87) Internationale Veröffentlichungsnummer: WO 2012/164011

(56) Entgegenhaltungen:
- EP-A1- 2 103 447
- WO-A2-2007/048563
- US-A1- 2004 144 472

## Beschreibung

Die Erfindung betrifft einen Mehrschichtkörper gemäß Oberbegriff des Anspruchs 1, ein Verfahren zu dessen Herstellung gemäß Oberbegriff des Anspruchs 5 und Herstellung unter dessen Verwendung von fälschungssicheren Dokumenten gemäß Oberbegriff des Anspruchs 7.

Holographische Heißprägefolienapplikationen auf Kreditkarten und Personaldokumenten haben sich zur Erhöhung des Fälschungs- und Kopierschutzes seit langem bewährt. In der Regel bestehen diese Heißprägefolien aus einer Trägerfolie, einer Ablöseschicht, einer Thermoplastschicht, in der Reliefstrukturen geprägt sind, einer Reflexionsschicht und einer hitzeaktivierbaren Klebstoffschicht. Die Herstellung der holographischen Strukturen der Heißprägefolie erfolgt mittels einer holographischen Prägematrize durch replikatives Einprägen in die Thermoplastschicht. Auf diese Weise wird eine Heißprägefolie mit sich wiederholenden holographischen Motiven, sogenannten Standardmotiven, erhalten.

Mittels Heißprägestempel werden beim Applikationsprozess nur die der Umrissform des Heißprägestempels entsprechenden Folienteile mit hitzeaktiviertem Klebstoff auf ein Substrat übertragen. Die anderen Folienteile verbleiben an der Trägerfolie und werden mit dieser vom Substrat abgezogen. Die Heißprägefolie kann beispielsweise auch vollflächig auf eine Kreditkarte appliziert werden, wenn der Heißprägestempel die Form einer Kreditkarte hat (DE 100 13 410 A1). Zur Bereitstellung von Mehrschichtkörpern, die erst bei der Verwendung (Transfer) mit Passfoto individualisiert werden, können diese Hologramm-Folienkörper nicht verwendet werden.

Zur Erhöhung des Fälschungsschutzes von Personaldokumenten wird in zunehmendem Maße gefordert, individuelle Personaldaten auch in den applizierten holographischen optischen Elementen zu haben, die visuell mit den gedruckten Personaldaten bei der Echtheitsprüfung des Dokumentes verglichen werden können. Es ist bekannt (EP 0 896 260 A2), dass Volumenhologramm-Filmoverlays mit holographischen Passfoto für den Dokumentenschutz eingesetzt werden. Die Herstellungs- und Materialkosten für Volumenhologramme sind im Vergleich zur Heißprägefolie mit holographischen Reliefstrukturen jedoch um ein Vielfaches höher.

Die Herstellung individueller Informationen von in Folie geprägten holographischen Reliefstrukturen verlangt zusätzliche Schritte. In der EP 0420261 B1 werden verschiedene Verfahren dazu aufgezeigt. So können individuelle Veränderungen des Heißprägefolienaufbaus durchgeführt werden, beispielsweise Bedruckung der Reflexionsschicht mit individuellen Daten mit nachfolgender Klebstoffbeschichtung, Demetallisierung oder Veränderung der Reflexionseigenschaften von Teilbereichen der Reflexionsschicht, individuelle Lasergravur der geprägten Thermolackschicht oder partielle Klebstoffbeschichtung in Form individueller Daten Diese Zusatzschritte erhöhen den Produktionsaufwand erheblich und die auf diese Weise personaldatentragende Hologrammfolie benötigt zusätzlichen Sicherheitsaufwand bei der Zwischenlagerung bis zur Applikation auf das Dokument. Darüber hinaus können sich Materialalterungen und mechanische Beschädigungen insbesondere im Bereich der in Form individueller Personaldaten aufgebrachten Klebstoffschicht gravierend auf die spätere Applikationsqualität auswirken

Es ist zudem bekannt (DE 35 11 146 A1), dass diffraktive Heißprägefolie auf Substrate partiell appliziert werden kann, wenn vorher nur bestimmte Substratbereiche mit hitzeaktivierbaren Klebstoff beschichtet werden. Die Heißprägefolie selbst hat keine Klebstoffbeschichtung und die Applikation findet nur dort statt, wo sich der Klebstoff auf dem Substrat befindet. Wird beispielsweise Klebstoff als ein Streifen auf ein Wertpapier aufgebracht, kann aus einer Heißprägefolie ein Streifen auf das Wertpapier appliziert werden (DE 102 22 433 A1). Als Klebstoff können auch Druckfarben verwendet werden, die bei höherer Temperatur klebrig werden. Damit erschließen sich Möglichkeiten für eine individuelle Folienapplikation, ohne dass aufwendige Prägestempelumrüstungen notwendig sind. So können Schriftzüge mit wechselndem Informationsgehalt, Nummerierungen etc., schnell und kostengünstig aus der Heißprägefolie auf Substratoberflächen appliziert werden. Hochkomplizierte Motive, wie beispielsweise Passfotos, können hierdurch jedoch nicht individuell aus diffraktiver Heißprägefolie direkt auf das Dokument appliziert werden.

Aus der WO 2009/103274 A1 (DE 10 2008 009 699 A1) ist ein Verfahren zur individualisierten Heißkleberapplikation bekannt, bei welcher auf ein Personaldokument (Substrat) u a ein Passfoto in invertierter Form aufgedruckt wird, wobei das Druckmedium (Toner, Farbstoff) bei Laminiertemperatur Klebstoffeigenschaften entwickelt. Dann wird darauf eine holographische Heißprägefolie auflaminiert, wonach deren obere Trägerschicht samt nicht thermofixierter Dekorfolienteile abgezogen wird, während in den gedruckten Passfotobereichen die Dekorschicht als zusammenhängende Schicht am Substrat verbleibt. Danach werden durch eine übergewalzte Haftfolie verbliebene Folienreste entfernt und schließlich eine Schutzschicht auflaminiert. Eine Trennung der Tätigkeit der Bereitstellung eines holographischen Mehrschichtenkörpers durch die Hersteller von Heißprägefolien einerseits und der (nachträglichen) individualisierende Transfer mit z. B. holographischen Passfotos der Dekorschicht durch den Verwender bzw. Hersteller von Dokumenten oder Ausweiskarten andererseits, ist damit nicht möglich.

Schließlich ist aus der WO 2007/048 563 A1 ein Mehrschichtkörper bekannt, der aus einer holographischen Heißprägefolie (Trägerfolie, Ablöseschicht, Dekorschicht), einer heiß- oder UV-aktivierbaren Kleberschicht und einer Papier-Ablösefolie besteht. Bei der Verwendung (Transfer) wird ein geheizter Stempel auf den Folienstapel gepresst oder in bestimmtem Bereich eine UV-Belichtung vorgenommen, wobei nur in diesem Bereich der Klebstoff aktiviert wird. Beim nachfolgenden Abziehen der Ablösefolie wird die Dekorschicht in der Umrissform des erhitzten oder belichteten Bereichs von der Trägerfolie der Heißprägefolie getrennt und verbleibt auf der Ablösefolie. Nun erfolgt die Heißlamination der auf diese Weise veränderten Heißprägefolie auf das Dokument, wonach die obere Trägerfolie abgezogen und eventuell eine Schutzfolie aufgebracht wird Das Abziehen der Ablösefolie kann also unmittelbar vor der Applikation der Heißprägefolie auf das Dokument stattfinden, wodurch einer Beschädigung der Folienoberfläche bei Zwischenlagerung vorgebeugt wäre. Allerdings können mit diesem Verfahren filigrane Konturen wie beispielsweise Passfotos nicht auf das Dokument appliziert werden, da sich infolge der Folien-Ablösung bekannter Weise Folienstaub bildet, der sich auf den thermisch aktivierbaren Klebstoff absetzen kann und somit die nachfolgende Verklebung mit der Dokumentenoberfläche beeinträchtigt. Auch ist dieser Folientransfer relativ Handhabungsaufwändig, da zwei Folien abzutrennen sind.

Aufgabe der Erfindung ist es somit, einen gattungsgemäßen Mehrschichtkörper, ein Verfahren zu dessen Herstellung und die Herstellung eines fälschungssicheren Dokuments mit holographischem Passfoto anzugeben, die einfach, sicher und kostengünstig in Herstellung und Handhabung sind und durch welche die Herstellung und die Applikation einer holographischen Heißprägefolie zeit- und raummäßig trennbar sind und kein besonderen Zwischelagerung-Sicherheitsaufwand wegen individueller Personaldaten vorzunehmen sind.

Diese Aufgabe wird durch einen Mehrschichtkörper mit den Merkmalen des Anspruchs 1, ein Verfahren zu dessen Herstellung nach Anspruch 5 und ein Herstellungsverfahren für fälschungssichere Dokumente mit den Merkmalen des Anspruchs 6 gelöst Vorteilhafte Ausgestaltungen sind in den entsprechend rückbezogenen Unteransprüchen gekennzeichnet.

Dem gemäß ist die untere Schicht des erfindungsgemäßen Mehrschichtkörpers eine transparente Polycarbonatfolie, die vorzugsweise eine Dicke von 50 - 100 µm besitzt, während der gehärtete UV-Klebstoffbereich an der Peripherie des ungehärteten UV-Klebstoffbereiches des jeweiligen mindestens einen auf/oberhalb der PC-Folie befindlichen Klebstoffschicht-Feldes angeordnet ist und diesen rahmenartig umgibt. Hierdurch besteht die Möglichkeit einer optimalen nachträglichen Individualisierung durch Masken-Belichtung z. B. mit einem Paßfoto vor Ort durch den Anwender z. B. den Endhersteller von Ausweiskarten. Dieser hat nur noch dafür Sorge zu tragen, dass eine Maskenbelichtung vorgenommen wird, danach die obere Trägerfolie abgezogen wird und schließlich eine Schutzschicht auflaminiert oder einfach aufgelegt wird Der so individualisierte transparente Mehrschichtkörper ist dann nur noch zusammen mit einem entsprechenden Substrat, wie Dokumentenkörper oder weiterem Folienpaket, die weitere Daten beinhalten oder aufzeigen, in eine Presse, z. B. eine Bürklepresse einzubringen und heiß zu verpressen, so dass ein unlösbarer Verbund vorhanden ist, in dessen Innerem sich die individuellen Daten relativ gut einsehbar, jedoch nicht mutwillig oder fälschend veränderbar bzw. manipulierbar befinden.

Die Verwendung von Prägehologrammschichten, in die "diffraktive zero order" -Gitter geprägt sind, wird bevorzugt. Dieser Gittertyp, bekannt unter dem Namen "DID", zeigt nicht den für Oberflächenhologrammgitter typischen Regenbogeneffekt sondern eine definierte Farbrekonstruktion in der nullten Ordnung Bei Drehung des Betrachtungswinkels um 90° wird ein definierter Farbwechsel beobachtet, ähnlich wie bei den optisch variablen Sicherheitsfarben, die unter dem Begriff "OVI" bekannt sind. "DID"-Gitter haben eine im Vergleich zu den Regenbogenhologrammen tiefere Oberflächenprägestruktur.

Durch das Aufbringen einer transparenten Klebstoffschicht auf die mit einer hochbrechenden Bedampfung versehenen geprägten Schicht wird die Farbintensität der DID-Gitter-Rekonstruktion in der nullten Ordnung weiter gesteigert, so dass erfindungsgemäße applizierte diffraktive Bereiche in Form individueller Informationen erhalten werden, die eine deutlich bessere Sichtbarkeit im Vergleich zu transparenten Regenbogenprägehologrammen aufweisen, aber durch ihre Transparenz trotzdem den Blick auf die darunterliegenden Informationen des Dokumentes zulassen.

Ein zusätzlicher Sicherheitsaufwand (außer der lichtdichten Verpackung) bei der Zwischenlagerung bis zur Applikation auf dem Dokument ist nicht notwendig, da der erfindungsgemäße Mehrschichtenkörper noch keine individuellen Daten (personendatentragende Informationen) enthält, und diese erst während der Applikation eingebracht werden.

Von Vorteil ist, wenn der Mehrschichtkörper z. B. die Abmessungen eines DIN A3 Bogens besitzt, mit z. B 24 bis 36 "Nutzen" mit je einem UV-Klebstoffschicht-Feld in gleichmäßiger Rasteraufteilung, wobei bei 24 Feldern oder Nutzen vorzugsweise eine Anordnung 4 x 6 vorhanden ist. Somit sind plattenförmige Mehrschichtkörper"Zwischenprodukte" in handlichem Format vorhanden, die in noch nicht individualisierter Form, sehr schonungsvoll vom Hersteller zum Verwender verbringbar sind. Letzterer kann dann unter Verwendung dieser Mehrschichtkörper z. B gleichzeitig mehrere Ausweiskarten bereit stellen, ohne große Probleme mit Ausrichtungsmarken zu haben

Das Verfahren zur Herstellung des erfindungsgemäßen Mehrschichtkörpers erweist sich ebenfalls sehr vorteilhaft, da lediglich auf eine transparente Polycarbonatfolie eine UV-aktivierbare Klebstoffschicht in Form mindestens eines Klebstoffschicht- Feldes aufzubringen ist, vorzugsweise aufzudrucken, wonach ein transparenter Prägehologrammfolienverbund ohne Klebstoffbeschichtung, bestehend aus Trägerfolie, Ablöseschicht und Dekorschicht, auf die klebstoffbedruckte PC-Folie laminiert wird. Danach erfolgt eine Maskenbelichtung des mindestens einen UV-Klebstoffschicht-Feldes, wodurch der Klebstoff partiell aktiviert wird und somit gehärtete und ungehärtete UV-Klebstoffbereiche vorhanden sind, wobei die gehärteten UV-Klebstoffbereiche die untere PC-Folie und Teile der Dekorschicht miteinander untrennbar verbindet. Eine sehr wirkungsvolle Besonderheit besteht dabei darin, dass die Maskenbelichtung so erfolgt, dass der gehärtete UV-Klebstoffbereich an der Peripherie des ungehärteten UV-Klebstoffbereiches des jeweiligen mindestens einen Klebstoffschicht-Feldes angeordnet ist und diesen rahmenartig umgibt.

Dadurch ist eine gesicherte Befestigung der einzelnen Schichten des so erstellten Mehrschichtkörpers vorhanden, so dass ein einfacher, sicher Transport an den Letzt-Verarbeitungsort bzw. Applikationsort möglich ist. Dabei ist dann trotzdem noch der erfindungsgemäße große Vorteil der nachträglichen Individualisierung (holographische Einbringung eines Passbildes) bei der Endverarbeitung zum erwünschten fälschungssicheren Dokument vorhanden

Die erfindungsgemäße Herstellung von fälschungssicheren Dokumenten unter Verwendung eines vorbeschriebenen erfindungsgemäßen Mehrschichtkörpers gestaltet sich, wie bereits vorhergehend teilweise beschrieben, relativ einfach und sicher. Sie besteht im wesentlichen darin, dass im/am Mehrschichtkörper der nicht gehärtete Klebstoffschichtbereich des mindestens einen Klebstoffbereich-Feldes nachträglich, d. h. beim Anwender, durch eine informationstragende optische Maske z. B. eines Passbildes, mit Licht teilgehärtet wird, wodurch eine nachträgliche Individualisierung erfolgt. Danach wird die mit einer Releaseschicht versehene (PET-) Polyethylen-Trägerfolie zusammen mit den nicht verklebten Prägehologrammschichtbereichen des transparenten Prägehologrammfolienverbundes abgezogen, und dann eine obere Schutzfolie auf die individualisierte Prägehologrammschicht aufgebracht. Dieser Folien-(Sandwich-) Verbund oder Folienpaket wird dann zusammen mit darunter eingelegten weiteren Folien oder einem weiteren Folienverbund, Substrat oder Dokument heißverpreßt, z. B. in einer Bürklepresse.

Anschließen wird dann, z. B. bei Herstellung von Ausweiskarten, der heißverpreßte Verbund anschließend zu Kartenformat ausgestanzt.

Es muß somit nicht mehr, wie bei bekannter Herstellung, z. B. nach erfolgter Belichtung zuerst eine untere Papierschicht abgezogen, danach auf ein Substrat aufgeklebt und dann die obere Trägerschicht abgezogen, eine obere Schutzschicht aufgebracht und schließlich verpreßt und ausgeschnitten werden. Denn erfindungsgemäß hat der Verwender nur noch die obere Trägerschicht abzuziehen, die Schutzschicht aufzulegen, weitere Schichten darunter zu legen und alles miteinander zu Verpressen und dann zu Karten Auszuschneiden.

Selbstverständlich besteht auch die Möglichkeit, nach Abziehen der Trägerfolie mit den nichtverklebten Dekorfolienteilen zusätzlich noch eine Oberflächensäuberung durch Abrollen einer Haftfolie vorzunehmen, wobei nicht haftende Folienreste entfernt werden.

Auch ist selbstverständlich und von Vorteil, wenn nach Aufbringen der Schutzschicht eine UV-Kompletthärtung erfolgt.

Erfindungsgemäß besteht nun die bereits vorerwähnte Möglichkeit, Mehrschichtkörper zur Herstellung einzelner Ausweiskarten bereitszustellen oder solche zur Herstellung mehrer Karten.

So kann bei Herstellung von ID-Karten ein Mehrschichtkörper mit Abmessungen z. B. eines DIN A3 Bogens mit 24 "Nutzen" und einer vorzugsweisen Anordnung 4 x 6 Felder oder Nutzen verwendet wird, wobei schrittweise (6x) eine gleichzeitige UV-Maskenbelichtung von vier Feldern erfolgt. Nach erfolgter Endverpressung können dann 24 Karten aus dem Bogen ausgestanzt werden.

Nachfolgend wird die Erfindung anhand von Ausführungsbeispielen unter Bezug auf die Zeichnung näher beschrieben. Es zeigen
- Fig. 1:: einen vertikalen Schnitt durch einen erfindungsgemäße Mehrschichtkörper
- Fig. 2:: den Mehrschichtkörper aus Fig. 1, während der individualisierenden UV-Maskenbelichtung,
- Fig. 3:: den Mehrschichtkörper aus Fig 2 mit abgezogener Trägerfolie
- Fig. 4 bis 6:: schematisch drei aufeinanderfolgende Schritte in der Herstellung der Mehrschichtfolie aus Fig. 1,
- Fig. 7 bis 11:: schematisch die aufeinanderfolgenden Schritte der Herstellung eines fälschungssicheren Dokuments unter Verwendung des Mehrschichtenkörpers aus Fig. 1, und
- Fig. 12 und 13:: ein Dokument mit Passfoto-Hologramm in Drauf- und Schnittansicht

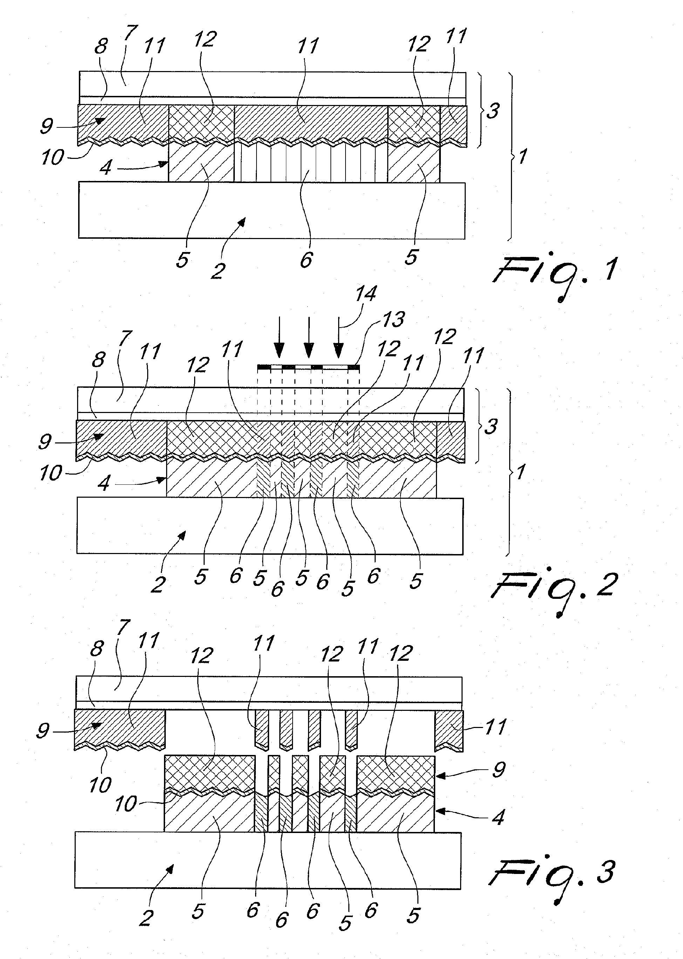

Wie aus **Fig. 1** zu erkennen ist, besteht ein erfindungsgemäßer Mehrschichtkörper 1 im Wesentlichen aus einer (PC-) Polycarbonatfolie 2 und einem Prägehologramm-Folienverbund 3 (kurz: Heißprägefolie), zwischen denen mindestens eine UV-Klebstoffschicht-Zone 4 angeordnet ist, die einen äußeren UV-gehärteten Klebstoffschicht-Bereich 5 (Außenbereich) und einen von diesem rahmenförmig umschlossenen inneren UV-nichtgehärteten Klebstoffschicht-Bereich 6 besitzt.

Die Heißprägefolie 3 ist zusammengesetzt aus einer oberen (PET-) Polyethylen-Trägerfolie 7, die mit einer Ablöse- oder Releaseschicht 8 versehen ist und einer Prägehologrammschicht 9, die an ihrer Unterseite mit einer hochbrechenden dielektrischen Reflexionsschicht 10 bedampft ist und die zusammen als Dekorschicht bezeichnet werden.

Die Prägehologrammschicht 9 besitzt jeweils (hier vertikal) über den UV-gehärteten Klebstoffschicht-Bereichen 5 einen verklebten Prägehologramm-Bereich 12, während über (oberhalb) den UV-nichtgehärteten Klebstoff-Bereichen 6 und den Klebstoffschicht-freien Zonen unverklebte Klebstoff-Bereiche 11 zu erkennen sind. Durch die "Verklebung" ist der jeweilige Bereich 12 der Prägehologrammschicht 9 an der Oberseite des jeweiligen gehärteten Klebstoffschicht-Bereiches 5 und mit diesem mit der PC-Folie 2 untrennbar verbunden.

In diesem Zustand wird der durchgehend transparente Mehrschichtkörper 1 bis zur Applikation auf einem Substrat oder Dokument zwischengelagert. Er enthält nur optische Prägehologrammelemente ohne personendatentragende Informationen, insbesondere ohne Passbild.

**Fig. 2** zeigt, wie der Mehrschichtkörper 1 im Zuge der Applikation (Transfer) unter Verwendung einer informationstragenden optischen Maske 13 mit UV-Licht senkrecht von oberhalb des nichtgehärteten Klebstoffschichtbereiches 6 belichtet wird, wodurch dieser Bereich teilgehärtet wird. Es wurden hierdurch weitere UV-gehärtete Bereiche 5 erzeugt, die ebenfalls eine untrennbare Verbindung der darüber befindlichen Prägehologrammschicht-Bereiche 12 mit der PC-Folie 2 herstellen.

In **Fig. 3** ist der Transferschritt des Abziehens der mit der Ablöse- oder Releaseschicht 8 versehenen Trägerfolie 7 vom Folienverbund 3, zusammen mit unverklebten Prägehologrammschicht-Bereichen 11, dargestellt.

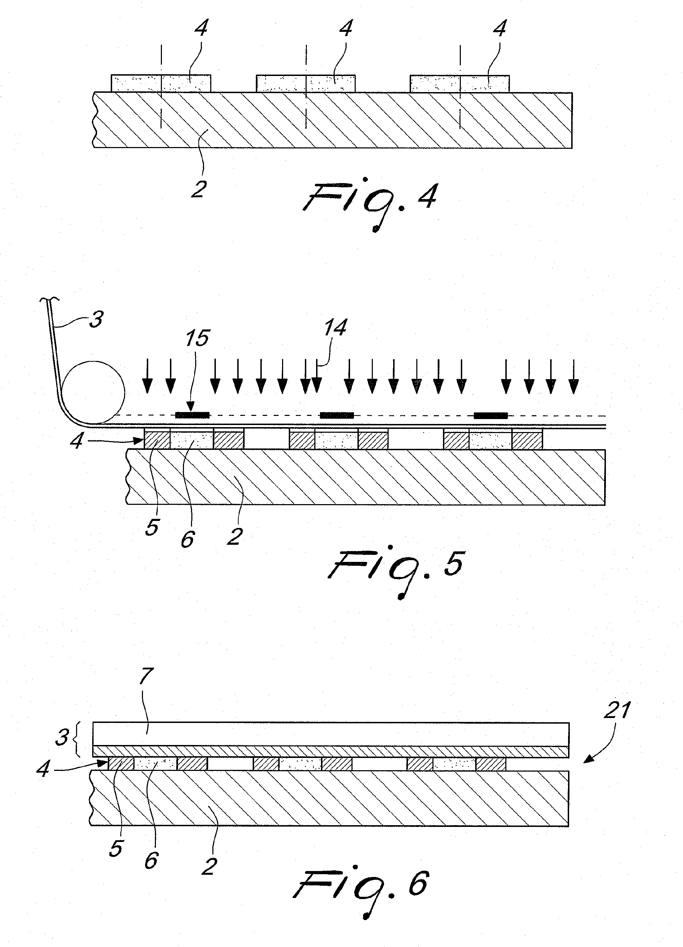

In **Fig. 4, 5 und 6** sind die wesentlichen Herstellschritte eines erfindungsgemäßen (vielfach-) Mehrschichtkörper-Bogens 21 dargestellt, also als Band oder Bogen mit mehreren sogenannten "Nutzen", d. h. Aktivzonen in ebener Anordnung neben- und hintereinander, die zur späteren Herstellung ca. ebenso vieler Sicherheitsdokumente dienen.

So zeigt **Fig. 4** wie auf einer PC-Folie 2 in gleichmäßiger Hintereinanderanordnung und (hier nicht dargestellter) Nebeneinanderanordnung mehrere Klebstoffschicht-Zonen 4 aufgebracht oder aufgedruckt sind.

**Fig. 5** veranschaulicht, wie auf die Klebstoff-Zonen 4 ein Prägehologramm-Folienverbund 3 auflaminiert ist/wird, wobei gleichzeitig oder kurz nachfolgend eine Belichtung mit UV-Licht 14 über eine optische Maske 15 so erfolgt, dass die Klebstoffschicht-Zonen 4 anschließend teilgehärtet sind, und zwar mit je einem UV-gehärteten äußeren Bereich 5 und einem UV-ungehärteten inneren Bereich 6.

**Fig. 6** zeigt, wie in einem weiteren Schritt der (Mehrfach-/Poly-) Mehrschichtkörper-Bogen fertiggestellt ist, der im Wesentlichen gleich aufgebaut ist wie der Mehrschichtkörper 1 aus Fig. 1, zu mehreren in gleichmäßiger Zonen-Mehrfachanordnung neben- und hintereinander. In diesem Zustand, jedoch UV-Licht geschützt) wird der Mehrfach-Mehrschichtkörper-Bogen 21 an die Abnehmer zur Weiterverarbeitung weitergegeben.

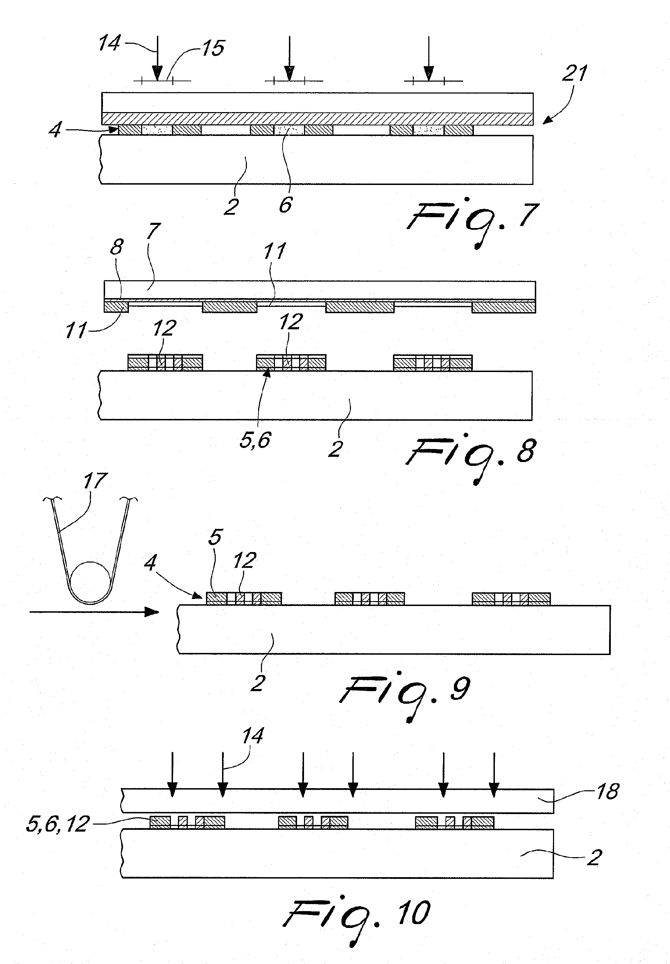

**Fig. 7 bis 11** veranschaulichen die einzelnen wesentlichen Schritte bei der Herstellung von Personaldokumenten (Ausweiskarten) unter Verwendung eines (Mehrfach-/Poly-) Mehrschichtkörper-Bogens 21 durch den Abnehmer/Anwender/Herasteller von Personaldokumenten (Ausweiskarten)

So zeigt **Fig. 7** wie die UV-ungehärteten Klebstoffschicht-Bereiche 6 der mehreren Klebstoffschicht-Zonen 4 eines Mehrfach-Mehrschichtkörper 21 (aus Fig 6) nunmehr durch UV-Belichtung 14 durch eine informationstragende optische Maske 15 eine Teilhärtung erfahren, wie im einzelnen im Zusammenhang mit Fig. 2 genauer beschrieben.

In **Fig. 8** ist dargestellt, wie - ähnlich wie in und mit Fig. 3 in Einfachausführung dargestellt bzw. beschrieben - die Trägerfolie 7 abgezogen wird, wobei zusammen mit der Ablöseschicht 8 unverklebte Prägehologrammschicht-Bereiche 11 mit abgezogen werden.

**Fig. 9** zeigt, wie anschließend eine Haftfolie 17 über den individualisierten verklebten und an der PC-Folie verbliebenen Prägehologrammschicht-Bereichen 12 abgerollt wurde, wodurch die darauf verbliebenen unverklebten Folienreste entfernt wurden.

**Fig. 10** veranschaulicht, wie danach eine weitere PC-Folie auflaminiert und UV-vollausgehärtet wird.

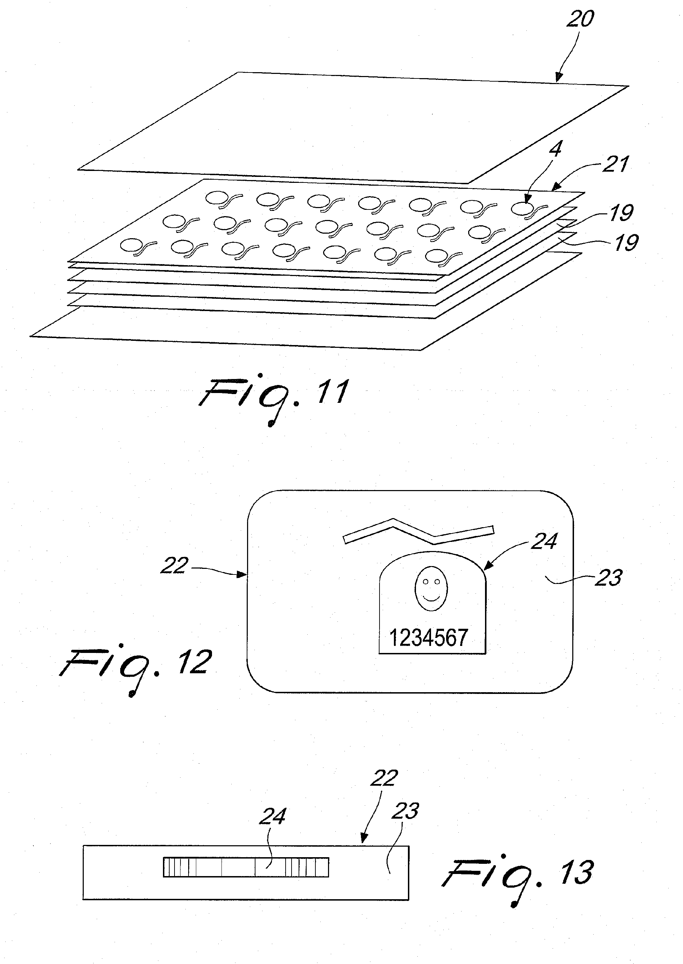

Alternativ kann aber auch eine weitere PC-Folie (Schutzfolie) nur einfach auf die individualisierte Dekorschicht aufgelegt und dieser Folien-Verbund heißverpreßt werden, zusammen mit weiteren untergelegten Folien. Dies kann wie in **Fig. 11** dargestellt, mit Hilfe einer sehr schematisch dargestellten Presse 20, z. B. einer Bürkle-Presse erfolgen.

Schließlich zeigen **Fig. 12 und 13** eine Personaldokument-Karte 22, wie sie in üblichem Format aus einem gemäß Fig. 11 heißverpreßten Folienverbund anschließend ausgestanzt wurde.

Fig. 12 zeigt die Dokument-Karte 22, die einen Kartenkörper 23 besitzt, in dessen Inneren die individualisierte Dekorschicht 24 mit Passbild, eingeschmolzen und unveränderbar, enthalten ist.

Diese Anordnung wird auch aus Fig. 13 gut sichtbar, die einen Schnitt durch die Karte 22 darstellt.

### Bezugszeichenliste

- 1.: Mehrschichtkörper
- 2.: (PC-) Polycarbonatfolie
- 3.: Prägehologramm-Folienverbund (Heißprägefolie)
- 4.: Klebstoffschicht-Zone oder Feld (Nutzen oderAktivzone)
- 5.: UV-gehärteter Klebstoffschicht-Bereich (Außenbereich)
- 6.: UV-ungehärteter Klebstoffschicht-Bereich
- 7.: (PET-) Polyethylenfolie
- 8.: Ablöse-/ Releaseschicht
- 9.: Prägehologrammschicht
- 10.: Reflexionsschicht
- 11.: unverklebter Prägehologramm-Bereich
- 12.: verklebter Prägehologramm-Bereich
- 13.: Maske
- 14.: UV-Licht
- 15.: Maske
- 16.: ---
- 17.: Haftfolie
- 18.: (PC-) Schutzfolie
- 19.: Folie
- 20.: (Bürkle-) Presse
- 21.: Mehrschichtkörper-Bogen
- 22.: (Personal-) Dokument-Karte
- 23.: Kartenkörper
- 24.: individualisierter Dekorschicht-Bereich

## Patentansprüche

1. Mehrschichtkörper für fälschungssichere Dokumente mit Hologramm, umfassend in Anordnung untereinander
- einen transparenten Prägehologramm-Folienverbund (3), bestehend aus einer Trägerfolie (7), einer Ablöseschicht (8) und einer Dekorschicht, zusammengesetzt aus einer Prägehologrammschicht (9) und einer auf dieser unterseitig aufgedampften hochbrechenden Reflexionsschicht (10),
- eine UV-aktivierbare Klebstoffschicht, bestehend aus mindestens einer Zone, wobei die mindestens eine UV-Klebstoffschicht-Zone partiell aktiviert ist und somit UV-gehärtete Klebstoffbereiche (5) und UV-ungehärtete UV-Klebstoffbereiche (6) besitzt,
- und eine untere Schicht,
- wobei die gehärteten UV-Klebstoffbereiche die untere Schicht und Teile der Dekorschicht miteinander untrennbar verbindet,
**dadurch gekennzeichnet,**
- **dass** die untere Schicht eine transparente Polycarbonatfolie (2) ist,
- und **dass** der UV-gehärtete Klebstoffbereich (5) an der Peripherie des UV-ungehärteten Klebstoffbereiches (6) der jeweiligen mindestens einen Klebstoffschicht-Zone (4) angeordnet ist und diesen rahmenartig umgibt.

2. Mehrschichtkörper nach Anspruch 1, **dadurch gekennzeichnet,**
**dass** die transparente Polycarbonatfolie (2) eine Dicke von 50 - 100 µm besitzt.

3. Mehrschichtkörper nach Anspruch 1, **dadurch gekennzeichnet,**
**dass** in die Prägehologrammschicht (9) "diffraktive zero order"- Gitter (Nullte-Brechung-Ordnung-Gitter) eingeprägt sind.

4. Mehrschichtkörper nach Anspruch 1 bis 3, **dadurch gekennzeichnet,**
**dass** der Mehrschichtkörper (1, 21) die Abmessungen eines DIN A3 Bogens besitzt, mit z. B. 24 bis 36 "Nutzen" d. h. Aktivzonen oder Felder mit je einer UV-Klebstoffschicht-Zone (4) in gleichmäßiger Rasteraufteilung, wobei bei 24 Zonen oder Nutzen vorzugsweise eine Anordnung 4 x 6 vorhanden ist.

5. Verfahren zur Herstellung eines des Mehrschichtkörpers nach den Ansprüchen 1 bis 4, bei dem
- auf eine Polycarbonatfolie (2) eine UV-aktivierbare Klebstoffschicht in Form mindestens einer Klebstoffschicht- Zone (4) aufgebracht wird, vorzugsweise aufgedruckt wird,
- dann ein transparenter Prägehologramm-Folienverbund (3) ohne Klebstoffbeschichtung, bestehend aus Trägerfolie (7), Ablöseschicht (8) und Dekorschicht (9,10), auf die klebstoffbedruckte PC-Folie (2) laminiert wird,
- sodann eine Maskenbelichtung (13, 14) der mindestens einen UV-Klebstoffschicht-Zone (4) erfolgt, wodurch der Klebstoff partiell aktiviert wird und somit UV-gehärtete Klebstoffschicht-Bereiche (5) und UV-ungehärtete Klebstoffschicht-Bereiche (6) besitzt und die gehärteten Klebstoffbereiche die untere PC-Folie (2) und Teile der Dekorschicht (9, 10) miteinander untrennbar verbindet,
- wobei die Maskenbelichtung (13, 14) so erfolgt, dass der gehärtete Klebstoffschicht-Bereich (5) an der Peripherie des ungehärteten Klebstoffschicht-Bereiches (6) der jeweiligen mindestens einen Klebstoffschicht-Zone (4) angeordnet ist und diesen rahmenartig umgibt.

6. Verfahren nach Anspruch 5, **dadurch gekennzeichnet,**
**dass** der durchgehend transparente Mehrschichtkörper (1, 21) bis zur Applikation auf einen Substrat oder Dokument zwischengelagert wird.

7. Herstellung von fälschungssicheren Dokumenten unter Verwendung eines durch ein Verfahren nach den Ansprüchen 5 und 6 hergestellten Mehrschichtkörpers wobei
- im/am Mehrschichtkörper (1, 21) der nicht gehärtete Klebstoffschicht-Bereich (6) der mindestens einen Klebstoffbereich-Zone (4) bei der Endverarbeitung beim Anwender nachträglich durch eine informationstragende optische Maske (13) z. B. eines Passbildes, mit Licht teilgehärtet wird, wodurch eine nachträgliche Individualisierung erfolgt,
- dann die mit einer Releaseschicht (8) versehene PET-Trägerfolie (7) zusammen mit den unverklebten Prägehologrammschicht-Bereichen (11) des transparenten Prägehologramm-Folienverbundes (3) abgezogen wird,
- sodann eine obere Schutzfolie (18) auf die individualisierte Prägehologrammschicht (9) aufgebracht wird, und
- schließlich dieser (Folien-Sandwich-) Verbund zusammen mit darunterliegenden weiteren Folien (19) oder einem weiteren Folienverbund, Substrat oder Dokument heißverpreßt wird (Bürklepresse).

8. Herstellung von fälschungssicheren Dokumenten nach Anspruch 7, **dadurch gekennzeichnet,**
**dass** der heißverpreßte Folienverbund anschließend in Kartenformat ausgestanzt wird

9. Herstellung von fälschungssicheren Dokumenten nach Anspruch 7, **dadurch gekennzeichnet,**
**dass** nach Abziehen der Trägerfolie (7) mit den unverklebten Dekorfolienteilen eine Oberflächensäuberung durch Abrollen einer Haftfolie (17) erfolgt, wobei unverklebten Folienreste entfernt werden.

10. Herstellung von fälschungssicheren Dokumenten nach Anspruch 7, **dadurch gekennzeichnet,**
**dass** nach Aufbringen der Schutzfolie (18) eine UV-Kompletthärtung erfolgt.

11. Herstellung von fälschungssicheren Dokumenten nach Anspruch 7, **dadurch gekennzeichnet,**
**dass** bei Herstellung von ID-Karten ein Mehrfach-Mehrschichtkörper-Bogen (21) mit Abmessungen z. B. eines DIN A3 Bogens, mit 24 "Nutzen" oder Aktivzonen und einer vorzugsweisen Anordnung 4 x 6 Zonen/Felder oder Nutzen verwendet wird, wobei schrittweise (6x) eine gleichzeitige UV-Maskenbelichtung von vier Feldern erfolgt, und dass nach erfolgter Endverpressung 24 Karten (22) ausgestanzt werden.

## Claims

1. Multi-layer body for forgery-proof documents with a hologram, comprising in an arrangement below one another
- a transparent stamp hologram film composite (3), consisting of a carrier film (7), a release layer (8) and a decorative layer, composed of a stamp hologram layer (9) and a high-refractive index reflecting layer (10) vapor-plated on the bottom of the same,
- an adhesive layer which can be UV-activated, consisting of at least one zone, the at least one UV adhesive layer zone being partially activated and therefore having UV-cured adhesive areas (5) and non-UV-cured adhesive areas (6),
- and a bottom layer,
- the cured UV adhesive areas perfectly bonding the bottom layer and parts of the decorative layer to each other, **characterized in that**
- the bottom layer is a transparent polycarbonate film (2),
- and **in that** the UV-cured adhesive area (5) is arranged at the periphery of the non-UV-cured adhesive area (6) of the respective at least one adhesive layer zone (4) and surrounds it like a frame.

2. Multi-layer body according to Claim 1, **characterized in that** the transparent polycarbonate film (2) has a thickness of 50-100 µm.

3. Multi-layer body according to Claim 1, **characterized in that** "diffractive zero order" grids are printed into the print hologram layer (9).

4. Multi-layer body according to Claim 1 or 3, **characterized in that** the multi-layer body (1, 21) has the dimensions of a DIN A3 sheet, e. g. with 24 to 36 panels, i. e. active zones, with one UV adhesive layer zone (4) each in an even grid division, where with 24 zones or panels, there is preferably an arrangement of 4 x 6.

5. Method for manufacturing one of the multi-layer body according to Claims 1 through 4, wherein
- an adhesive layer which can be activated by UV, in the form of at least one adhesive layer zone (4), is applied and preferably printed on a polycarbonate film (2),
- after this, a transparent print hologram film composite (3) without adhesive coating, consisting of carrier film (7), release layer (8) and decorative layer (9, 10), is laminated onto the PC film (2) on which the adhesive has been printed,
- after this, mask exposure (13, 14) of the at least one UV adhesive layer zone (4) takes place, where the adhesive is partially activated in this manner and therefore has UV-cured adhesive layer zones (5) and non-UV-cured adhesive layer zones (6) and where the cured adhesive zones perfectly bond the lower PC film (2) and parts of the decorative layer (9, 10) together,
- where mask exposure (13, 14) takes place such that the cured adhesive layer zone (5) is arranged at the periphery of the non-cured adhesive layer zone (6) of the respective at least one adhesive layer zone (4) and surrounds it like a frame.

6. Method according to Claim 5, **characterized in that** the completely transparent multi-layer body (1, 21) is intermediately stored till application on a substrate or a document.

7. Manufacture of forgery-proof documents using a multi-layer body manufactured by a method according to Claims 5 and 6, where
- in/on the multi-layer body (1, 21), the non-cured adhesive layer zone (6) of the at least one adhesive layer zone (4) is subsequently, during final processing on the user's site, partially cured by light through an information-bearing optical mask (13), e. g. of a passport photograph, which leads to subsequent personalization,
- after this, the PET carrier film (7) provided with a release layer (8) is removed together with the non-bonded print hologram layer zones (11) of the transparent print hologram film composite (3),
- after this, an upper protective film (18) is applied on the personalized print hologram layer (9), and
- finally, this (film sandwich) composite is hot-pressed (Bürkle press) together with additional films (19) under it or with an additional film composite, substrate or document.

8. Manufacture of forgery-proof documents according to Claim 7, **characterized in that**
the hot-pressed film composite is subsequently punched out in card format.

9. Manufacture of forgery-proof documents according to Claim 7, **characterized in that**
after removal of the carrier film (7) with the non-bonded decorative film parts, the surface is cleaned by rolling over an adhering film (17), during which process non-bonded film residues are removed.

10. Manufacture of forgery-proof documents according to Claim 7, **characterized in that**
after application of the protecting film (18), complete UV curing takes place.

11. Manufacture of forgery-proof documents according to Claim 7, **characterized in that**
for the manufacture of ID cards, a poly-multi-layer body sheet (21) with dimensions e. g. of a DIN A3 sheet, with 24 "panels" or active zones and a preferable arrangement of 4 x 6 zones/panels is used, where simultaneous UV mask exposure of four panels takes place in steps (6x), and **in that** after final pressing, 24 cards (22) are punched out.

## Revendications

1. Corps multicouches pour documents infalsifiables avec un hologramme, comprenant, selon un agencement entre eux,
- un composé de feuilles à hologramme estampé transparent (3), se composant d'une feuille de support (7), d'une couche de séparation (8) et d'une couche de décoration, constitué d'une couche d'hologramme estampé (9) et d'une couche de réflexion (10) fortement réfringente métallisée sous vide sur le dessous de celle-ci,
- une couche d'adhésif activable par UV, se composant d'au moins une zone, cette au moins une zone de couche d'adhésif UV étant partiellement activée et possédant ainsi des zones d'adhésif durci aux UV (5) et des zones d'adhésif UV non durci aux UV (6),
- une couche inférieure,
- les zones d'adhésif durci aux UV reliant, de manière inséparable entre elles, la couche inférieure et des parties de la couche de décoration,
**caractérisé en ce que**
- la couche inférieure est une feuille de polycarbonate transparente (2),
- et **en ce que** la zone d'adhésif durci aux UV (5) est disposée à la périphérie de la zone d'adhésif non durci aux UV (6) de l'au moins une zone de couche d'adhésif (4) respective et entoure celle-ci à la manière d'un cadre.

2. Corps multicouches selon la revendication 1, **caractérisé en ce que** la feuille de polycarbonate transparente (2) possède une épaisseur de 50 - 100 µm.

3. Corps multicouches selon la revendication 1, **caractérisé en ce que** des réseaux « diffractive zero order » (réseaux de diffraction d'ordre zéro) sont estampés dans la couche d'hologramme estampé (9).

4. Corps multicouches selon les revendications 1 à 3, **caractérisé en ce que** le corps multicouches (1, 21) possède les dimensions d'une feuille DIN A3 avec par exemple une « utilité » de 24 à 36, c'est-à-dire des zones actives ou champs avec respectivement une zone de couche d'adhésif UV (4) selon une distribution de grille régulière, dans lequel, avec des zones ou une utilité de 24, il y a de préférence un agencement de 4 x 6.

5. Procédé pour la fabrication d'un corps multicouches selon les revendications 1 à 4, dans lequel
- sur une feuille de polycarbonate (2), une couche d'adhésif activable par UV sous la forme d'au moins une zone de couche d'adhésif (4) est appliquée, de préférence imprimée dessus,
- ensuite, un composé de feuilles à hologramme estampé transparent (3) sans revêtement d'adhésif, se composant d'une feuille de support (7), d'une couche de séparation (8) et d'une couche de décoration (9, 10), étant laminé sur la feuille de polycarbonate (2) avec l'adhésif imprimé dessus,
- une exposition lumineuse à travers un masque (13, 14) de l'au moins une zone de couche d'adhésif UV (4) ayant alors lieu, de sorte que l'adhésif est partiellement activé et possède ainsi des zones de couche d'adhésif durci aux UV (5) et des zones de couche d'adhésif non durci aux UV (6) et les zones d'adhésif durci reliant, de manière inséparable entre elles, la couche de polycarbonate inférieure (2) et des parties de la couche de décoration (9, 10),
- l'exposition lumineuse à travers un masque (13, 14) s'effectuant de manière à ce que la zone de couche d'adhésif durci (5) soit disposée à la périphérie de la zone de couche d'adhésif non durci (6) de l'au moins une zone de couche d'adhésif (4) respective et entoure celle-ci à la manière d'un cadre.

6. Procédé selon la revendication 5, **caractérisé en ce que** le corps multicouches (1, 21) transparent de bout en bout est stocké de manière intermédiaire jusqu'à l'application sur un substrat ou document.

7. Fabrication de documents infalsifiables en utilisant un corps multicouches fabriqué selon un procédé selon les revendications 5 et 6, dans laquelle
- dans/sur le corps multicouches (1, 21), la zone de couche d'adhésif non durci (6) de l'au moins une zone de couche d'adhésif (4), lors du finissage chez l'utilisateur, est ultérieurement partiellement durcie avec de la lumière à travers un masque optique (13) portant des informations, par exemple une photo de passeport, moyennant quoi il y a une individualisation ultérieure,
- la feuille de support PET (7) munie d'une couche de séparation (8) étant ensuite enlevée, ensemble avec les zones de couche d'hologramme estampé (11) non collées du composé de feuilles à hologramme estampé transparent (3),
- une feuille de protection supérieure (18) étant alors appliquée sur la couche d'hologramme estampé (9) individualisée, et
- ce composé (de feuilles en sandwich) étant finalement pressé à chaud (presse Bürkle), ensemble avec d'autres feuilles (19) situées en-dessous ou un autre composé de feuilles, substrat, ou document.

8. Fabrication de documents infalsifiables selon la revendication 7, **caractérisée en ce que** le composé de feuilles pressé à chaud est ensuite découpé au format de cartes.

9. Fabrication de documents infalsifiables selon la revendication 7, **caractérisée en ce que**, après l'enlèvement de la feuille de support (7) avec les parties de feuille de décoration non collées, il s'en suit un nettoyage de surface par déroulement d'une feuille adhésive (17), moyennant quoi des restes de feuille non collés sont éliminés.

10. Fabrication de documents infalsifiables selon la revendication 7, **caractérisée en ce qu'**après l'application de la feuille de protection (18), il s'en suit un durcissement complet aux UV.

11. Fabrication de documents infalsifiables selon la revendication 7, **caractérisée en ce que**, lors de la fabrication de cartes d'identité, on utilise une feuille de corps multicouches multiple (21) aux dimensions par exemple d'une feuille DIN A3 avec une « utilité » ou des zones actives de 24 et avec de préférence un agencement de 4 x 6 zones/champs ou utilité, dans laquelle on effectue, pas à pas, (6x) une exposition lumineuse aux UV simultanée, à travers un masque, de quatre champs, et **en ce que**, une fois le pressage final achevé, 24 cartes (22) sont découpées.
